# EUROPEAN PATENT APPLICATION

(11) **EP 1 020 504 A1**
(43) Date of publication of application: **19.07.2000**
(21) Application number: 00100951.3
(22) Date of filing: 18.01.2000
(51) Int. Cl.: C09J 5/08, E04F 15/10

(54) **System and method for improving water resistance of laminate flooring**

(30) Priority: 18.01.1999 US 232546
(71) Applicant: Premark RWP Holdings, Inc., Wilmington, Delaware 19801 (US)
(72) Inventor: Stolarski, Victoria L., Austin, Texas 78728 (US); Mafoti, Robson, Temple, Texas 76501 (US); Reeb, William R. Jr., Minneapolis, Minnesota 55403 (US); Wohleb, Clifford D. Sr., Belton, TX 76513 (US); Lubowinski, Steven J., Temple, TX 76503 (US); Nelson, Thomas J., Belton, TX 76513 (US); Sykes, Malcolm P., Temple, TX 76504 (US)
(74) Representative: Frohwitter, Bernhard, Dipl.-Ing.

(57) **Abstract**

A system and method for providing a substantially permanent joint between pieces of laminated material wherein the seam between the laminated material is water resistant is disclosed. A preferred embodiment of the present invention utilizes a non-waterbased adhesive, such as a urethane adhesive, in order to provide a seam substantially impermeable to moisture. Preferably the adhesive utilized expands when cured in order to completely fill the seam area and thus prevent infiltration.

## Description

The present invention relates in general to the joining of laminated products such as may be used for decorative flooring, counter and table tops, and wall panels, and more particularly to the joining of such laminated products to provide a substantially moisture resistant seam while providing desired structural properties.

In the past laminate products, such as decorative and/or protective counter and table tops, flooring, and wall panels, have included adhesive lamination of an anterior layer, providing decorative or protective properties, to a substrate material or core such as particle board, chipboard, or fiberboard, i.e., medium density fiberboard (MDF). Generally the anterior layer will include one or more kraft paper layers which are themselves laminated together using various types of resins, such as melamine formaldehyde and phenolic resins. Likewise, a posterior surface or backer laminate may include several kraft paper layers which are also laminated together using resins, such as phenolic resins. For example, a high pressure decorative laminate may comprise a very thin overlay sheet impregnated with melamine resin and having aluminum oxide grit to provide for abrasion resistance, a decorative sheet disposed thereunder, and several sheets of kraft paper impregnated with phenolic resin disposed below the decorative sheet. When combined under high pressure, on the order of 1000 psi, and in the presence of heat, on the order of 300° F, the melamine resin and phenolic resin will crosslink to provide a mechanical bond between these layers.

A typical manufacturing process for such materials to be brought together to result in the above mentioned laminated products, such as the above mentioned laminated flooring products, includes adhesively attaching a decorative laminate surface to an anterior surface of a substrate of a particular size compatible with efficient manufacturing processes, such as a 4 foot by 8 foot sheet commonly used in the United States. Similarly, the backer laminate posterior surface is adhesively attached to a posterior surface of the substrate. After a sufficient period of time has elapsed for the lamination adhesive to cure, the laminated board may be fabricated into laminated products of desired sizes, shapes, and/or configurations.

For example, with the above mentioned flooring products, a 4 foot by 8 foot sheet of laminate, including the decorative anterior surface, MDF core material, and backer posterior surface, may be cut into planks or tiles of dimensions consistent with building materials the decorative surface is to emulate, which are suitable for a desired type of installation, which may be more conveniently packaged and shipped, or to meet similar considerations. With a decorative flooring product two of the four edges of each plank or tile are generally milled to form a groove running the length of the edge of the plank or tile. Additionally, the remaining two edges are milled to form a tongue corresponding to the groove of the other edges. This tongue and groove configuration of the laminated product allows individual pieces, i.e., the aforementioned planks or tiles, to be interconnected for improved structural integrity as well as to aid in presenting a smooth composite surface when joined.

Generally, during the installation of laminated products, such as the above described flooring planks or tiles, a waterbased Polyvinyl Acetate (PVA) seam adhesive is applied to the groove of a piece of the laminated product after which the tongue of a corresponding piece of the laminated product is slid into place to engage the groove and thereby produce a composite surface. Waterbased adhesives, such as the aforementioned PVA as well as vinyl acetate ethylene (VAE) and polyvinyl alcohol (PVOH), have been employed because waterbased adhesives are generally considered environmentally friendly and safe for use by the general public. Moreover, waterbased adhesives provide sufficient mechanical strength to bond two pieces of laminated product together and, most significantly, because the water in these seam adhesive slightly swell the substrate material of the tongue and groove to yield a well fit and mostly sealed seam, such as in the tongue and groove system described in United States Patent Number 5,618,602 where swelling of the tongue by the waterbased adhesive assists in properly aligning the decorative surfaces.

However, waterbased adhesives present drawbacks associated with their use including a lack of water resistance, which is common to wood-based products in general, along the edges of the installed product where the MDF or other core material is exposed. Exposure of core materials such as fibreboard, chipboard, or particle board to moisture such as from accidental flooding, repeated cleaning wit large amounts of water or seeping or weeping through a cement subfloor, or other harsh environmental conditions can cause the seams between the pieces of laminated products to peak and/or the pieces of laminated products themselves to cup. This peaking and cupping is attributable to the moisture swelling of the wood-based substrate and may also be experienced where moisture associated with the natural moisture content of substrate material is allowed to escape from the substrate material.

The weakness of the prior art laminated products presented by a lack of water resistance at the seams is often very critical in the uses to which such laminated products are put. For example, the above mentioned laminated flooring products are often decorated to resemble wood flooring planks so as to provide the look of a wood floor in an area inhospitable to such a flooring surface, i.e., damp environments such as a kitchen or bathroom. However, where the seams of the laminated product present similar drawbacks to the flooring material it is intended to replace, the laminated product cannot be relied upon to completely fulfill the need for use in harsh environments.

Accordingly, there is a need in the art for providing a seam adjoining two pieces of a laminated product which is resistant to infiltration, such as by moisture, and which is substantially sealed and provides a desired level of mechanical bonding.

These and other objects, features and technical advantages are achieved by a system and method in which a non-waterbased structural adhesive, such as urethane adhesives, epoxies, polyamide adhesives, polyimide adhesives, or the like, is utilized in a seam between two corresponding pieces of laminated product in order to provide a desired mechanical bond which is resistant to penetration and/or disintegration such as by water infiltration. Preferably, a non-waterbased adhesive is utilized which not only is itself water resistant, but which is adapted to expand or otherwise fill in any free space between the two corresponding pieces of material to be joined. This expansion of adhesive material within the confines of an interface, such as a tongue and groove arrangement may be relied upon for positioning of a surface, such as the aforementioned tongue, such as provided by the swelling of surfaces provided by prior art water based adhesives. Accordingly, the seam provided through the use of such an adhesive provides a uniform surface with a suitable mechanical bond as all surface areas of the edges of each piece of joined material are engaged as well as providing a complete seal to infiltration, such as by the aforementioned water. Moreover, as swelling of the substrate material is not relied upon for the desired fitting of the pieces of laminate, alternative substrate materials such as plastics, including commingled acrylonitrile-butadiene-styrene (ABS) plastics as shown and described in the above referenced patent application entitled "Polymeric Foam Substrate and its Use as in Combination with Decorative Surfaces," can be employed.

Where a laminated product including a posterior and anterior surface are themselves resistant to infiltration of water and other substances, an installed surface utilizing a non-waterbased adhesive of the present invention presents a solution in which a core material, such as MDF common in laminated flooring products, is substantially fully protected from moisture infiltration as its anterior, posterior, and edge surfaces are covered by water resistant substances. However, as the preferred non-waterbased adhesive utilized according to the present invention provides a very good water resistant seam, m cases where the laminated product is to be installed in extremely wet environments, water proofing in addition to that typically available such as in the above mentioned backer laminates may be used. Accordingly, the sealing of joints between pieces of a laminated product according to the present invention to provide a surface resistant to water infiltration may be supplemented by the use of a water proofed laminate surface such as the water proofed backer described in the above referenced patent application entitled "Laminate".

The foregoing has outlined rather broadly the features and technical advantages of the present invention in order that the detailed description of the invention that follows may be better understood. Additional features and advantages of the invention will be described hereinafter which form the subject of the claims of the invention. It should be appreciated by those skilled in the art that the conception and specific embodiment disclosed may be readily utilized as a basis for modifying or designing other structures for carrying out the same purposes of the present invention. It should also be realized by those skilled in the art that such equivalent constructions do not depart from the spirit and scope of the invention as set forth in the appended claims.

For a more complete understanding of the present invention, and the advantages thereof, reference is now made to the following descriptions taken in conjunction with the accompanying drawing, in which:
FIGURE 1 shows a cross section view of a prior art laminated produce piece;
FIGURES 2A through 2B show a cross section view of two tongue and grove prior art laminated product pieces interfaced;
FIGURE 3A through 3F show interfacing of two pieces of laminated product according to the present invention; and
FIGURES 4A through 4B show the method employed to measure the cross-directional cupping of a flooring plank after exposure to water.

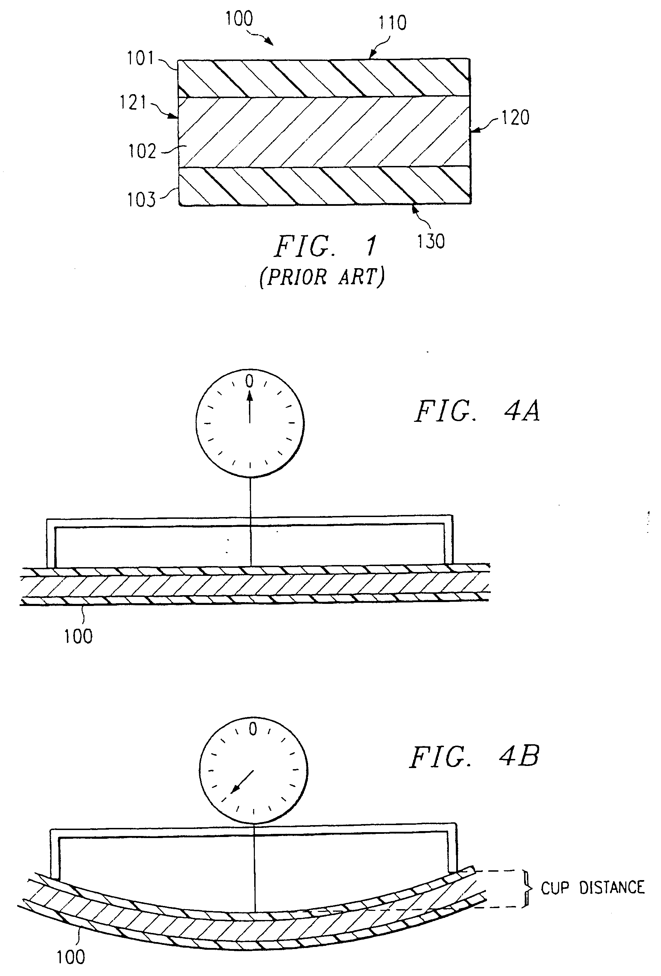

Directing attention to FIGURE 1, a cross-sectional view of a typical laminated product such as may be used for flooring, counter and table tops, wall panels, or the like is shown generally as laminated product piece 100. Laminated product piece 100 may be cut from a larger sheet of laminated product to provide dimensions consistent with a particular use to which the laminated product may be put and/or to better emulate a particular type of building material, such as wood planks, terrazzo tile, masonry bricks, or the like. Moreover, as discussed in more detail below, laminated product piece 100 may be adapted to more securely interface with other pieces of laminated product, such as through the use of tongue and groove edges, in order to provide a composite surface. A preferred embodiment of the above mentioned tongue and groove edges found to provide superior results with the application of the present invention are shown and described in United States Number 5,618,602 entitled "Articles with Tongue and Groove Joint and the Method of Making Such a Joint", the disclosure of which is incorporated herein by reference. This particular tongue and groove system is specifically adapted to counter the effects of variations in the placement and/or size of the tongue and groove, such as due to mechanical drift or wearing of the equipment used to create them, by relying on the swelling of the tongue and groove due to absorption of moisture from a water based adhesive to force the tongue against the bottom of the groove and thereby provide a smooth and even joint between the decorative surfaces of two pieces of laminate. However, as will be understood by the discussion below, the expansion of adhesive applied in the seam according to the present invention has been found to provide the desired engaging of the tongue in the groove to result in a smooth and even joint as well as a joint which is filled and therefore substantially impervious to infiltration such as by moisture

Laminated product piece 100 includes anterior or first superstructure surface material 101, substrate or core material 102, and posterior or second superstructure surface material 103. Although the present invention is described herein with reference to a laminated product such as shown in FIGURE 1 having a core material sandwiched between an anterior surface and a posterior surface, it should be appreciated that there is no limitation to the use of a laminated product as shown in FIGURE 1. For example, the present invention may be utilized to join pieces of laminated products including only an anterior surface or a posterior surface, if desired. However, a preferred embodiment of the present invention includes the use of a laminated product including both an anterior surface and a posterior surface in order to cooperate with the sealing of the seam according to the present invention to prevent infiltration of moisture into, and/or escape of moisture out of, the core material.

Moreover, it shall be appreciated that, although reference herein is made to anterior and posterior surfaces, the present invention is not limited to the use of a laminated product in any particular orientation or configuration. For example, the laminated material may be disposed in an orientation wherein both the anterior and posterior surfaces are fully or partially exposed, such as a room divider, and, thus, neither surface is particularly identifiable as anterior or posterior.

Anterior surface material 101 preferably provides a decorative and/or protective layer having properties of the desired lamination product. For example, anterior surface material 101 may provide an exposed surface once interfaced with substrate 102 which provides a decorative print suitable for use as a wall panel, as a tub or shower enclosure, as a kitchen counter top, or as a flooring plank. Additionally or alternatively, this exposed surface of anterior surface material 101 may provide a protective surface suitable for use in wet environments, i.e., water resistant or water proof, or which is heat resistant and/or abrasion resistant.

Although not shown in FIGURE 1, anterior surface material 101 may itself be a laminated product. For example anterior surface material 101 may be prepared using a decorative paper layer having a desired pattern printed thereon which is impregnated with melamine-formaldehyde resin and laminated to one or more sheets of kraft paper impregnated with phenol formaldehyde resin. The surface of the decorative layer that will be exposed in the final product may be prepared by bonding an overlay layer, such as a thin paper sheet impregnated with the same type of melamine formaldehyde resin. Where laminate product piece 100 is to be utilized in a high wear environment, such as its use in flooring, a filler may be included in the overlay in order to provide abrasion resistance and/or a non-slip surface. Such fillers may include alumina, calcium carbonate, milled glass fibers, ground glass fibers, or the like.

Posterior surface material 103 may be utilized to provide an installation surface of the laminated product which is more suitable for interfacing with a surface to be covered by the laminated product or to present a surface more consistent with the tools, adhesives, and techniques of a base of laminated product installers. As with anterior surface 101, posterior surface material 103 may be a laminated product. For example posterior surface material 103 may be prepared using layers of printed paper, overlay paper or kraft paper impregnated with melamine resin and layers of kraft paper impregnated with phenolic resin which are laminated to one another. Additionally, or alternatively, posterior surface material 103 may provide a protective layer having properties of the desired lamination product, such as water resistance or water proofing, as described above in the above referenced patent entitled "Laminate" previously incorporated herein by reference. Accordingly, posterior surface material 103 may be utilized as a high pressure decorative laminate (HPDL) backer known in the art for providing an exposed surface adapted for installation on structure such as sub-flooring, including concrete subflooring prone to water seepage, untreated wood products of a counter top or cabinet, and the like.

It shall be appreciated that, in addition to the above mentioned laminated compositions utilized as anterior and/or posterior surface materials, which may include such laminated compositions as high pressure decorative laminate, low pressure decorative laminate, and high pressure backer, anterior and/or posterior surface material utilized according to the present invention may include non-laminated compositions, including solid surface material, i.e., solid surface counter top material, and metal, and even natural surface materials such as marble, granite, slate, soapstone, and the like. Accordingly, although reference herein may be made to laminated surface materials, it is not intended to limit such surface materials to materials which are themselves laminated, but rather to refer to materials which may be laminated upon the substrate material and/or materials which themselves, although not being laminated, may provide a laminate, such as a floor covering or counter top laminate.

Substrate material 102 may be any of a number of substrate materials utilized to give laminated product piece 100 structural integrity and mechanical strength. Substrate materials well known in the art include medium density fibreboard (MDF), chipboard, and particle board. However, other materials suitable for providing structure and mechanical strength consistent with the purposes of the laminated product may be utilized as substrate material 102 consistent with the present invention, such as strand board, wafer board, plywood, and the like. Additionally, as the expansion of the adhesive of the present invention may be relied upon to provide proper interfacing of the engaged surface and thus alignment of the decorative or other exterior surface, substrates which are themselves water impervious, such as plastics as shown and described in the above referenced patent application entitled "System and Method for Adhering Laminate to an Alternate Substrate Material", may be utilized to provide results similar to those of cellulose substrates which expand or swell to properly interface when waterbased adhesive is applied.

Although not readily apparent from the illustration of FIGURE 1, the interface of anterior surface material 101 and substrate material 102 preferably includes a layer of adhesive material (not shown) to provide mechanical integrity of the anterior surface material and substrate material in the resulting laminated product, whereas the opposing side of anterior surface material 101 provides face 110, which may include a decorative print such as a wood grain design, typically exposed to the environment when laminated product 100 is installed. The interface of posterior surface material 103 and substrate material 102 also preferably includes a layer of adhesive material (not shown) to provide mechanical integrity of the posterior surface material and substrate material in the resulting laminated product, whereas the opposing side of posterior surface material 103 provides face 130 itself typically interfacing with a structural surface such as a subfloor. The adhesive material utilized for either or both above described interfaces is most often a urea-formaldehyde adhesive, but may also be a waterbased adhesive such as PVA.

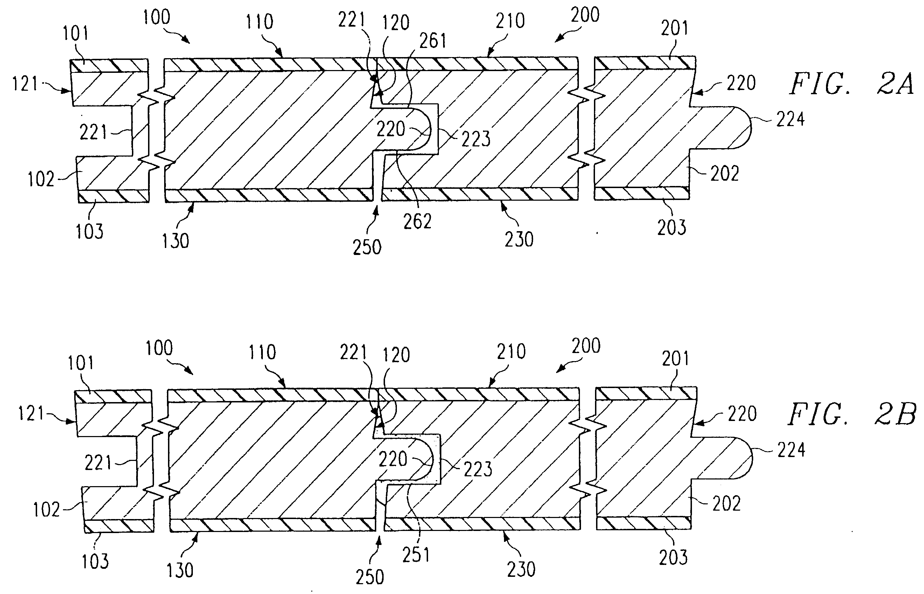

In addition to faces 110 and 130, laminated product piece 100 as shown in FIGURE 1 includes edges 120 and 121 wherein a portion of anterior surface material 101, substrate material 102, and posterior surface material 103, as well as a portion of the adhesive material utilized in interfacing these materials, is exposed. Typically in use edges 120 and 121 will be interfaced with another piece of laminated product so as to provide an enlarged composite surface presented by the faces of the laminated product pieces. For example, directing attention to FIGURE 2A, laminated product piece 100 is shown dry interfaced, i.e., not benefiting from the application of an adhesive material, with laminated product piece 200. In the embodiment of FIGURE 2A, opposing edges 120 and 121 of laminated product piece 100 are provided with tongue 220 and groove 221 respectively. Likewise, opposing edges 220 and 221 of laminated product piece 200 include tongue 224 and groove 223 respectively.

As shown in FIGURE 2A, tongue 220 of laminated product piece 100 engages groove 223 of laminated product 200 to provide a substantially smooth composite anterior surface from face 110 of laminated product piece 100 and face 210 of laminated product piece 200 and a substantially smooth composite posterior surface from face 130 of laminated product piece 100 and face 230 of laminated product piece 200. As is typical in the prior art, the opposing edges 120 and 121 of laminated product piece 100 and opposing edges 220 and 221 of laminated product piece 200 include taper in both the upper and lower portions, i.e., both above and below the tongue or groove, in order to assist in allowing the pieces to interface sufficiently to provide a relatively continuous composite surface from anterior surfaces 110 and 210. As posterior surfaces 130 and 230 are generally not expected to present a viewable surface, the tapering of the lower portions of opposing edges 120, 121, 220, and 221 generally provides a lower distal end relieved more than the upper distal end providing the viewable interface of the two laminated product pieces.

Accordingly, it can be readily appreciated that even if anterior surfaces 101 and 201 and posterior surfaces 103 and 203 were to provide a water proof surface, the joint of two pieces of laminated product provides seam 250 through which moisture or other substances may infiltrate substrate material 102, the adhesives provided in the interfaces between the various materials and/or the anterior and posterior surface materials. Although most readily appreciable at the lower portion of seam 250, gaps exist both at the upper portion of seam 250 (between surfaces 110 and 210) as well as the lower portion of seam 250 (between surfaces 130 and 230). Accordingly, substrate material 102 and/or substrate material 202 may be exposed to moisture in sufficient amounts to cause the laminated product pieces to peak, cup, or, in extreme cases, totally or partially delaminate. Moreover, seam 250 if not properly sealed may allow escape of moisture from substrate material 102 and/or substrate material 202 sufficient to cause deformation resulting in the above mentioned peaking, cupping, and/or delaminating. Furthermore, as portions of the adhesive material utilized in the interface of the anterior and posterior materials to the substrate material are also present in seam 250, shown in FIGURE 2B as adhesive material 251, the aforementioned infiltration may also cause undesired effects, such as total or partial delaminating such as where an adhesive is utilized which is dissolvable in water after curing.

Additionally, it should be appreciated from FIGURE 2A that the typical prior art tongue and groove used to interface laminated product piece 100 and laminated product piece 200 is substantially symmetrical and most likely includes interface gaps, such as interface gaps 261 and 262, provided to allow easy installation of the tongue into the groove, to allow the presence of adhesive material between the tongue when interfaced with the groove, and/or due to mechanical drift in the manufacture of the tongue and the groove. Accordingly, there is no internal mechanism for the proper registration of anterior surfaces 110 and 210 when laminated pieces 100 and 200 are interfaced as tongue 220 is free to move, at least to a certain extent, throughout the area of gaps 261 and 262 when installed.

In the past during the installation of laminated product pieces, a waterbased adhesive, such as the above mentioned PVA, was applied in seam 250, such as by application in groove 223 prior to engaging tongue 220. Waterbased PVA adhesives, as well as vinyl acetate ethylene (VAE) and polyvinyl alcohol (PVOH), have been employed because waterbased adhesives typically provide sufficient mechanical strength to bond two pieces of laminated product together and are generally considered environmentally friendly and safe for use by the general public and, therefore, are satisfactory in many applications. Additionally, because the water in these waterbased seam adhesives slightly swell the tongue and groove, they have been relied upon to provide a tight fit and mostly sealed seam between the joined pieces. However, due to the symmetry of tongue 220, the migration of adhesive applied within groove 223 is substantially uncontrolled and therefore may in some instances primarily migrate to the upper portion of seam 250, in other instances primarily migrate to the lower portion of seam 250, or in still other instances substantially uniformly migrate to both the upper and lower portions of seam 250. Accordingly, it is generally the practice according to the prior art to conservatively apply adhesive 251 in order to avoid substantial migration of adhesive material beyond seam 250 onto external surfaces in the cases of the adhesive primarily migrating to either the lower or upper portions of seam 250 and, therefore, overflowing the seam area. This conservative application of adhesive, although avoiding substantial external migration, often results in the incomplete filling of seam 250 as shown in FIGURE 2B, and thus the incomplete sealing of this interface.

Accordingly, it has been discovered that when utilized in environments where relatively high levels of moisture are experienced, such as environments subjected to repeated wet mopping or high relative humidity levels for extended durations, the joint formed by the above described waterbased adhesives is insufficient to prevent moisture from infiltrating the seam and thus infiltrating the substrate material and/or the adhesives used at the interface of the anterior and posterior materials and the substrate material. Therefore, in these kinds of environments the desired smooth composite surface of the joined laminated product pieces is often visibly uneven due to peaking and cupping of the laminated product pieces resulting from swelling of the substrate material. Additionally, where such infiltration is most severe delaminating may result due to extreme swelling and breakdown of the substrate material and/or breakdown of the adhesive present at the interface of the anterior/posterior material and the substrate material.

To remediate the above described problems resulting from moisture and other substances infiltrating the joint between two pieces of laminated product, the present invention utilizes a non-waterbased adhesive at seam 250 to provide a superior joint. Accordingly, adhesives including one-component and two-component urethane adhesives or other structural adhesives such as epoxy, polyimide, or polyamide are utilized in the seam between multiple pieces of a laminated product.

Preferably, the non-waterbased adhesive utilized according to the present invention is not only itself water resistant, but is also adapted to expand or otherwise fill in any free space between the two corresponding pieces of material to be joined. Accordingly, the seam provided through the use of such an adhesive provides a suitable mechanical bond as all surface areas of the edges of each piece of joined material are engaged as well as providing a complete seal to infiltration, such as by the aforementioned water.

A preferred embodiment of the present invention utilizes a one-component urethane adhesive based on methylene diisocyanate prepolymer, such as a blend of 4,4-and 2,4- diphenylmethane diisocyanate (MDI) with an ether modified MDI prepolymer. Preferably, a tertiary amine is added to initiate crosslinking. In the preferred embodiment, this adhesive blend is reduced to a usable viscosity (∼6,000-8,000 cps) with the addition of a low boiling solvent to yield a final product that is ∼95-98% solids. A preferred embodiment adhesive conforming to the above description is referred to herein as BR1-32. BR1-32 has been found to be substantially environmentally friendly as the adhesive as utilized according to the present invention has a volatile organic content (VOC) of <0.4g/L. Moreover, air monitoring has revealed that no free isocyanate is detectable when this adhesive is used according to the present invention.

BR1-32 is a one-component moisture cured urethane. The reaction mechanism, well known in the art, entails the interaction of an isocyanate end group with water, such as may be supplied through atmospheric humidity according to the present invention, to yield an amine and carbon dioxide gas. The amine reacts with a second isocyanate group producing a urea crosslink. In this way, the molecular weight of the main polymer chain continuously builds to ultimately yield a cured adhesive with the desired mechanical integrity. What makes the BR1-32, and other similar adhesives, specifically useful in this application is that the discharge of the carbon dioxide gas during the cure mechanism actually foams the adhesive. This foaming not only fills any free spaces between the materials to be joined, but also squeezes out the seams over the anterior and posterior surfaces to completely seal any initial gaps. As the urethane adhesive is itself water resistant, the substrate material of the laminated product pieces joined according to the present invention are completely sealed. Of additional interest is the BR1-32 adhesive does not stick to the outer melamine layer of a typical top, decorative surface, allowing this surface to be completely cleaned after the adhesive cures leaving an unflawed appearance.

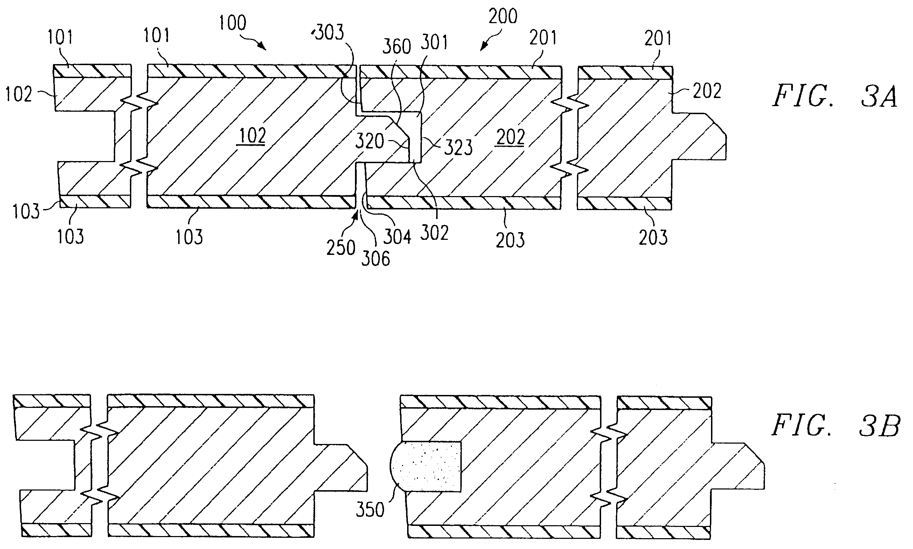

The use of an adhesive such as BR1-32 is illustrated in FIGURES 3A through 3F wherein seam 250 between laminated product piece 100 and laminated product piece 200 is shown greatly exaggerated. Directing attention to FIGURE 3A, laminated product pieces 100 and 200 are shown dry interfaced, i.e., no adhesive is applied to their surfaces in seam 250. It should be appreciated that tongue 320 and groove 323 of FIGURES 3A through 3F are illustrated as the preferred embodiment tongue and groove system of above referenced United States Patent Number 5,618,602, although the present invention is also useful with other mechanical interfaces including the above described prior art tongue and groove. This preferred tongue and groove system provides tapering of the edges of the laminated products in order to assist in presenting a substantially continuous anterior surface when interfaced. However, it should be appreciated that this improved tongue and groove system is adapted for such results with tapering only one such edge of a laminated product. Moreover, as will be better appreciated from the discussion below, tongue 320 includes beveled surface 360 thus presenting an asymmetrical tongue

Although exaggerated for pedagogical purposes, gaps, such as gaps 301 and 302 visible at the distal end of tongue 320 and gaps 303 and 304 between a portion of the substrate materials visible at the upper and lower portions of seam 250, are present in this seam when interfaced without the benefit of a waterbased adhesive to provide swelling of the substrate materials. Moreover, gap 306 is visible between the posterior laminates as well as a small gap (not shown) between the anterior laminates respectively.

It should be appreciated that the gaps present between the substantially water resistant or water proof anterior and/or posterior laminates may not substantially benefit, i.e., diminish or close, from the application of a waterbased adhesive and the attendant swelling of substrate material as the laminates will remain substantially unaffected by the application of this adhesive. Accordingly, the use of a waterbased adhesive, although providing an acceptable mechanical bond between the pieces of substrate material and thereby providing a relatively good seal there between, often leaves a gap in the seam allowing infiltration. Infiltration of moisture through this gap can result in breaking down of the seam adhesive itself, breaking down of the adhesives present at the interface of the anterior and posterior laminates and the substrate material, and infiltration into the substrate material and/or anterior and posterior laminate materials themselves causing the undesired results described above.

However, directing attention to FIGURE 3B, application of a non-waterbased adhesive adapted to expand and fill all gaps of seam 250, such as the above mentioned one-component urethane adhesive BR1-32, is shown as adhesive 350 which will fill each of gaps 301-306 as laminate pieces 102 and 202 are filly engaged and as adhesive 350 expands due to the aforementioned foaming. Accordingly, all edge surfaces of laminated product pieces 100 and 200 are engaged with adhesive 350 and, thus, an excellent mechanical bond is formed there between.

Applying the above mentioned non-waterbased adhesives, such as the preferred embodiment one-component urethane BR1-32 adhesive, is preferably accomplished through depositing an adhesive bead into the groove or onto the tongue of the pieces of material to be joined. Of course, where a tongue and groove joint is not used, a bead of the adhesive may be deposited upon any of the surfaces to be joined, such as along a surface of a rabbeted joint or in a dado of a dovetail joint.

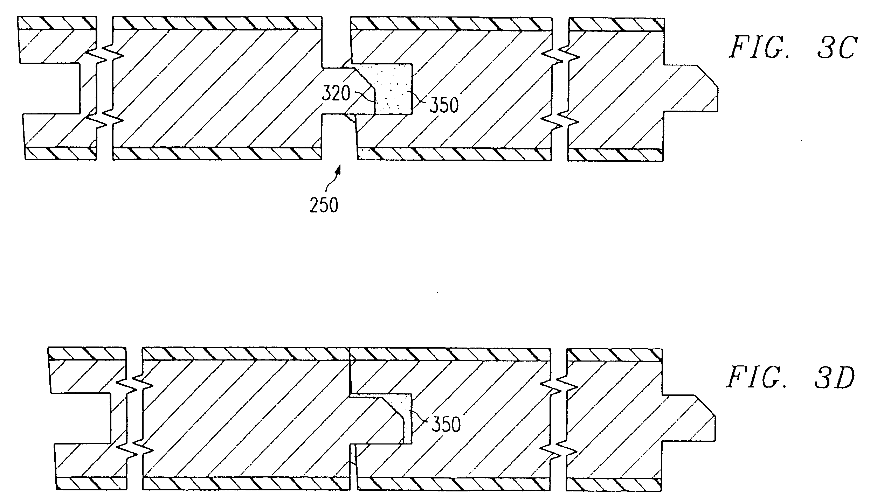

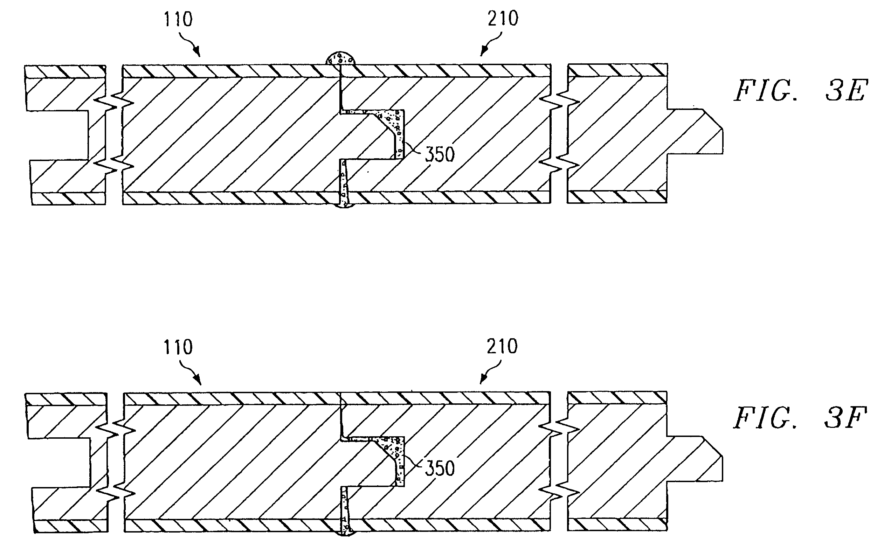

Preferably the bead is deposited into the groove in sufficient volume to slightly protrude therefrom before the tongue is engaged as illustrated in FIGURE 3B. For example a bead within the range of approximately 1/32nd of an inch to approximately 1/8th of an inch where the laminated product is of dimensions of a laminated flooring product, i.e., the product is approximately 5/16th of an inch thick with a groove approximately 3/32nd of an inch wide and approximately 1/8th of an inch deep with a tongue having dimensions substantially corresponding to the groove, with the bead most preferredly being 3/32nd of an inch, has been found to be satisfactory. Depositing the adhesive in this manner provides for the desired distribution of the adhesive material when the preferred embodiment tongue is inserted in the groove. Specifically, directing attention to FIGURES 3C and 3D it can be seen that the lower portion of tongue 320 shears off or otherwise directs a small portion of adhesive 350 into the lower portion of seam 250 while the beveled edge of tongue 320 directs adhesive material not required in the groove into the upper portion of seam 250. As adhesive 350 foams, or otherwise expands upon curing, the small portion directed to the lower portion of seam 250 completely fills the void, possibly even foaming slightly beyond this area as shown in FIGURE 3E. Likewise, the portion of adhesive 350 directed into the upper portion of seam 250 also expands to completely fill this void. A further-advantage of this expansion of adhesive 350 is realized in the fact that due to the asymmetrical shape of tongue 320, it is biased during this expansive curing such that its non-beveled surface is pressed against the lower portion of groove 323 as shown in FIGURE 3E and thus anterior surfaces 110 and 210 are consistently and accurately registered without special tools or action on the part of an installer. Moreover, as all gaps of seam 250 are filled, the seam is resistant to infiltration by substances such as water and, as adhesive 350 is itself preferably water resistant, infiltration of water is further prevented.

The application of adhesive 350 and its subsequent expansion, foaming in the preferred embodiment shown as the less solid adhesive 350 in FIGURE 3E, to fill all of seam 250 may result in a small amount of excess adhesive migrating beyond seam 250 as shown at the top and bottom of seam 250 in FIGURE 3E. However this slight excess of adhesive is advantageous in ensuring that all gaps of seam 250 we filled and preventing a cup or void at an end of seam 250 wherein a substance such as water might collect and cause undesired results, such as infiltrating an edge of anterior or posterior laminate material. For example, typical high pressure decorative laminates, such as those described above including a layer of a decorative paper layer which is impregnated wit melamine-formaldehyde resin laminated to one or more sheets of kraft paper impregnated with phenol formaldehyde resin, although presenting a face which is substantially water proof, may present an edge which when exposed to water for extended periods of time may be infiltrated and damaged.

The excess urethane adhesive of the preferred embodiment of the present invention is easily removed from seam 250 to present a smooth surface, such as surface 310 shown in FIGURE 3F, consistent with surfaces 110 and 210 of laminated product pieces 100 and 200. For example, any excess adhesive tat has foamed up through the seam onto the decorative surface can be easily scraped off after it has cured to a rigid solid, such as by careful scraping with a commonly known flat edged instrument such as a razor blade or other such tool, as the preferred embodiment adhesive is adapted so as not to stick to anterior surfaces 110 and 210, such as the outer melamine layer of a typical top, decorative surface. Once dislodged by the aforementioned scraping, the loose adhesive scraping material is therefore in a dry powder like or flake like form which may be removed by common techniques such as vacuum cleaning.

Experimentation has revealed that surprising and significant improvement in water resistance is achieved wit the use of a non-waterbased adhesive according to the present invention. In particular, the preferred embodiment one-component BR1-32 urethane adhesive was found to enhance the water resistance of MDF based laminated flooring products by decreasing the peaking of the floor by approximately 50%. Below empirical results of experimentation wherein several versions of MDF based laminated flooring, including a set of flooring pieces joined by the preferred embodiment BR 1-32 urethane adhesive and a corresponding set of flooring pieces joined by PVA, were laid on a wet carpet pad for 7 days. After the second day, the temperature and humidity of the room in which the material was installed was cycled from 110°F/0% rH to 50°F/95% rH and measurements were taken for cross direction (CD) cup of planks in marked locations, feeler gauge measurements for machine direction (MD) and CD seams, and of the entire floor for MD and CD.

It shall be appreciated that the flooring pieces associated with the test results below include comparison of a standard or "original" laminate with and without the application of seam adhesive according to the present invention. The flooring pieces of the test results below also include comparison of "waterproof' backers having the benefit of application of the water proof backer of the above referenced patent application entitled "Laminate"with and without the application of seam adhesive according to the present invention.

As shown in the table below, the cross direction cup of flooring planks was significantly improved through the use of the urethane adhesive of the preferred embodiment of the present invention (the adhesives utilized to obtain the below results were TITE-BOND II available from Franklin International, Columbus, Ohio, where PVA is indicated, and the one-component BR1 -35 urethane adhesive described above, where urethane is indicated). Measurements are taken across the width of the plank and are given in inches from what would be a flat surface as shown in FIGURES 4A (illustrating a cupping measuring device engaged with a flat plank) and 4B (illustrating the cupping measuring device engaged with the plank cupped).

| **Cross Direction Cup of Planks** | | | |
|---|---|---|---|
| **Floor Type** | **Day-0 Install** | **Day-2 Install** | **Day-6 End** |
| **Original Laminate** | | | |
| Flooring joined w/PVA | 0.004 | 0.066 | 0.080 |
| Flooring joined w/ urethane | 0.001 | 0.001 | 0.044 |

| **Water Proof Backer** | | | |
|---|---|---|---|
| Flooring joined w/PVA | 0.005 | 0.006 | 0.031 |
| Flooring joined w/ urethane | 0.005 | 0.006 | 0.025 |

It should be noted that the reduction in cupping from 0.080 inches in the PVA sample to 0.044 inches in the urethane sample yields a product with a visual appearance that is only slightly detectable and thus, would not warrant objection from an owner/user or require subsequent replacement of the floor. Laboratory testing suggest the following correlation between cupping magnitude and visual perception:

| **Cross Direction Cup of Planks** | |
|---|---|
| **Cross-Direction Cupping Magnitude** | **Visual Perception** |
| >0.050 inches | Visually objectionable, flooring must be replaced. |
| 0.030-0.050 | Slightly visually detectable, most occasions do not necessitate replacement of flooring. |
| <0.030 | Not visually detectable, flooring looks as it was on installation, no replacement necessary. |

A second study was conducted in which flooring planks seamed with either a PVA adhesive or the BR1-32 adhesive described above were submerged in water for up to 24 hours. Specifically, a first set of two flooring planks with MDF core were joined using PVA adhesive, specifically TITE-BOND II available from Franklin International, Columbus, Ohio, while a second set of two flooring planks with MDF core were joined using urethane adhesive, specifically the one-component BR1-35 urethane adhesive of the preferred embodiment, such that the recommended adhesive application was used. After 24 hours the planks were cut so that an 8 inch double-plank sample remained of the middle material, i.e., the ends of the planks were cut off to provide an 8 inch sample of joined flooring material. All exposed outside edges were completely sealed with silicone sealant. Initial thickness measurements of 4 areas at the seam between the two planks were taken before the samples were completely submerged into water (68-72°F). The samples were removed from the water, towel dried, and measured at 3, 6, 9, and 24 hours. The percent swell (increase in thickness from original measurement) was calculated by using the difference from the initial measurement. The results are shown in the table below. Again it is apparent that the urethane adhesive provides a much greater resistance to water penetration of the seam.

| **Plank Swelling** | | | | |
|---|---|---|---|---|
| **Floor Type** | **Initial % Swell** | **6hr Soak % Swell** | **9hr Soak % Swell** | **24hr Soak % Swell** |
| **Original Laminate** | | | | |
| Flooring joined w/PVA | 0.00% | 7.13% | 9.20% | 13.64% |
| Flooring joined w/ urethane | 0.00% | 0.19% | 0.27% | 0.70% |

Moreover, in addition to the above described superior results when exposed to a wet environment for an extended period of time, the use of non-waterbased adhesives according to the present invention have been found to provide superior seam strength. Comparing samples prepared using the one-component BR1-35 urethane adhesive of the preferred embodiment and samples prepared using PVA, specifically TITE-BOND II available from Franklin International, Columbus, Ohio, tested at temperatures of - 25°F, 25°F, 72°F, 125°F, and 175°F, the adhesive of the preferred embodiment was found to have greater strengths, at non-ambient conditions than the PVA as shown in the table below.

| **Seam Strength** | | | | | |
|---|---|---|---|---|---|
| **Material** | -**25**E**F Max Load (lb/in)** | **25**E**F Max Load (lb/in)** | **72**E**F Max Load (lb/in)** | **125**E**F Max Load (lb/in)** | **175**E**F Max Load (lb/in)** |
| Flooring joined with PVA | 335 | 322 | 292 | 230 | 111 |
| Flooring joined with BR1-32 | 337 | 328 | 300 | 247 | 155 |

It shall be appreciated that the strength of the joint provided by the application of the urethane adhesive of the preferred embodiment provides effectively equal strength at ambient conditions but greatly improved strength at elevated temperatures, such as might be experienced in direct sunlight or near a heat source. Accordingly, the application of urethane adhesive according to the present invention may also provide a joint less likely to fail when utilized in environmental conditions likely to be experienced in use.

Although the present invention and its advantages have been described in detail, it should be understood that various changes, substitutions and alterations can be made herein without departing from the spirit and scope of the invention as defined by the appended claims.

## Claims

1. A system for joining two pieces of laminated product to provide a substantially water impermeable seam there between, said system comprising the steps of:
a non-waterbased adhesive adapted to provide a substantially water impermeable product when cured; and
means for causing said adhesive to fill gaps between a first edge of a first piece of laminated product and a first edge of a second piece of laminated product when said first piece of laminated product and said second piece of laminated product are interfaced.

2. The system of claim 1, wherein said means for causing said adhesive to fill gaps comprises:
an edge surface of said first piece of laminated product adapted to direct migration of said adhesive when said first piece of laminated product and said second piece of laminated product are interfaced.

3. The system of claim 1 or 2, wherein said adhesive is also adapted to expand during curing, and said means for causing said adhesive to fill gaps includes activation of said adhesive to cure and thereby expand.

4. The system of claim 3, wherein said expansion of said adhesive is utilized in combination with the structure of said gaps between said first edge of said first piece of laminated product and said first edge of said second piece of laminated product to provide registration of a surface of said first piece of laminated product and a corresponding surface of said second piece of laminated produce.

5. The system of any preceding claim, wherein said adhesive is also adapted to provide suitable strength at temperatures substantially greater than ambient temperatures, and to allow relatively simple removal of cured adhesive product which expands beyond a seam to be sealed

6. The system of claim 5, further comprising:
means for removing excess cured said adhesive to provide a substantially homogeneous composite surface across said first piece of laminated product, said second piece of laminated product, and said seam there between.

7. The system of any preceding claim, wherein said adhesive is a one-component urethane adhesive, a two-component urethane adhesive, an epoxy, a polyamide adhesive or a polyimide adhesive.

8. The system of claim 7, wherein said adhesive is a one-component urethane adhesive based on methylene diisocyanate prepolymer.

9. The system of any preceding claim, wherein said means for causing said adhesive to fill gaps comprises foaming said adhesive in situ.

10. The system of any preceding claim, farther comprising:
means for substantially waterproofing a first superstructure surface material of said laminated product to cooperate with said cured adhesive to provide a substantially water impermeable composite surface across said first piece of laminated product, said second piece of laminated product, and said seam there between.

11. A method of joining two pieces of laminated product to provide a substantially moisture impermeable seam there between, said method comprising the steps of:
applying a non-waterbased adhesive to a first edge of a first piece of laminated product;
interfacing said first edge wit a first edge of a second piece of laminated product;
activating said adhesive so as to cause said adhesive to fill all gaps between said first edge of said first piece of laminated product and said first edge of said second piece of laminated product; and
allowing said activated adhesive to fill all gaps between said first edge of said first piece of laminated product and said first edge of said second piece of laminated product and to substantially cure.

12. The method of claim 11, further comprising the step of:
removing excess cured said adhesive to provide a substantially homogeneous composite surface across said first piece of laminated product, said second piece of laminated product, and said seam there between.

13. The method of claim 11 or 12, wherein said activation step includes the step of introducing moisture into said applied adhesive.

14. The method of any of claims 11 to 13, wherein said activation step includes the step of foaming said adhesive.

15. The method of any of claims 11 to 14, wherein said adhesive is a one-component urethane adhesive, a two-component urethane adhesive, an epoxy, a polyamide adhesive, or a polyimide adhesive.

16. The method of claim 15, wherein said adhesive is a one-component urethane adhesive based on methylene diisocyanate prepolymer.

17. The method of claim 15, wherein said adhesive is a two-component urethane adhesive and said activation step includes the step of:
introducing a second component of said two-component urethane adhesive into a first component of said two-component urethane adhesive.

18. The method of any of claims 11 to 17, further comprising the step of:
substantially waterproofing a first superstructure surface material of said laminated product to cooperate with said cured adhesive to provide a substantially water impermeable composite surface across said first piece of laminated product, said second piece of laminated product, and said seam there between.

19. The method of any of claims 11 to 18, further comprising the step of:
selecting said non-waterbased adhesive to meet desired criteria including to provide a substantially water impermeable product when cured, to provide suitable strength at temperatures substantially greater than ambient temperatures, to provide expansion of adhesive during curing, and to allow relatively simple removal of cured adhesive product which expands beyond a seam to be sealed.

20. The method of claim 19, wherein said desired criteria also include bonding with a substrate material of said laminated product without causing said substrate material to swell.

21. The method of any of claims 11 to 20, wherein said laminated product is a laminated flooring product.

22. The method of claim 21, wherein said laminated flooring product includes a high pressure decorative laminate and a high pressure backing laminate.

23. The method of claim 22, wherein said laminated flooring product includes a substrate material sandwiched between said high pressure decorative laminate and said high pressure backing laminate.

24. The method of claim 23, wherein said substrate material is selected from a low density fibreboard, a medium density fibre board, a high density fibreboard, a particle board, a chipboard, a water board, a strand board, a wafer board, a strand board, or plywood.

25. The method of claim 23, wherein said substrate material comprises a non-cellulose based core.

26. The method of claim 25, wherein said non-cellulose based core is a plastic acrylonitrile-butadiene-styrene (ABS) core.

27. The method of any of claims 21 to 26, wherein said laminated flooring product includes as a laminate a low pressure decorative laminate, a solid surfacing material, or a metal surfacing material.

28. A system for joining a first piece of flooring laminate with a second piece of flooring laminate to provide a water proof seam between said first and second piece of flooring laminate, wherein said first and second piece of flooring laminate include a water permeable substrate material, said system comprising:
a urethane adhesive disposed in said seam between said first and second piece of flooring laminate; and
an agent to cause foaming of said urethane adhesive while disposed in said seam, wherein said urethane adhesive disposed in said seam is deposited in an amount determined to be sufficient to completely fill said seam when said urethane adhesive is foamed by said agent.

29. The system of claim 28, wherein said amount of urethane adhesive deposited is a bead of from approximately 1/32nd of an inch to approximately 1/8th of an inch thick where the flooring laminate is approximately 5/16th of an inch tick and includes a tongue and groove interface with the groove being approximately 3/32nd of an inch wide and approximately 1/8th of an inch deep.

30. The system of claim 29, wherein said amount of urethane adhesive deposited is a bead of approximately 3/32nd of an inch thick.

31. The system of any of claims 28 to 30, wherein said urethane adhesive is a one-component urethane adhesive and said agent to cause foaming is water.

32. The system of claim 31, wherein said urethane adhesive is based on methylene diisocyanate prepolymer.

33. A method of providing a substantially water impermeable floor covering utilizing a flooring laminate material including a decorative laminate on a first side of a cellulose based substrate and a backing laminate on a second side of said cellulose based substrate, wherein a plurality of pieces of said flooring laminate material are joined edgewise to provide a continuous substantially homogenous composite surface, said method comprising the steps of:
selecting an adhesive which is substantially water impermeable when cured and which expands during curing;
depositing said adhesive along an edge of a first piece of said flooring laminate material;
engaging an edge of a second piece of said flooring laminate material with said edge of said first piece of said flooring laminate material having said adhesive deposited thereon;
providing proper conditions for said adhesive to expand when said first and second pieces of said flooring laminate material are engaged; and
removing a portion of said adhesive after said adhesive has substantially cured.

34. The method of claim 33, wherein said step of providing proper conditions comprises the step of introducing moisture into said adhesive.

35. The method of claim 33 or 34, wherein said adhesive is a urethane adhesive.

36. The method of claim 35, wherein said urethane adhesive is a one-component urethane adhesive based on methylene diisocyanate prepolymer.

37. The method of any of claims 33 to 36, further comprising the step of providing said laminate backer with a water proofing substance.
